# EUROPÄISCHE PATENTSCHRIFT

(11) **EP 1 141 647 B1**
(45) Veröffentlichungstag und Bekanntmachung des Hinweises auf die Patenterteilung: **31.03.2004**
(21) Anmeldenummer: 99953769.9
(22) Anmeldetag: 11.10.1999
(51) Int. Cl.: F28F 9/14, F28F 9/26, F16L 13/00

(54) **VERFAHREN ZUM LÄNGSPRESSVERBINDEN VON ALUMINIUM-HEIZKÖRPERTEILEN UND ANSCHLUSSSTUTZEN ZUR DURCHFÜHRUNG DES VERFAHRENS**
METHOD OF CONNECTING ALUMINUM RADIATOR ELEMENTS BY LONGITUDINAL PRESSING AND CONNECTING SLEEVE FOR CARRYING OUT SAID METHOD
PROCEDE DE CONNEXION PAR SERRAGE LONGITUDINAL DE PARTIES D'ELEMENTS THERMIQUES EN ALUMINIUM ET TUBULURE DE RACCORDEMENT POUR METTRE LEDIT PROCEDE EN OEUVRE

(30) Priorität: 16.12.1998 DE 19858150
(43) Veröffentlichungstag der Anmeldung: 10.10.2001
(73) Patentinhaber: Aluplan Heiztechnik GmbH & Co. KG, 89312 Günzburg (DE)
(72) Erfinder: PÜTZ, Siegfried, D-89312 Günzburg (DE)
(74) Vertreter: Koch, Günther, Dipl.-Ing.
(86) Internationale Anmeldenummer: PCT/EP1999/007601
(87) Internationale Veröffentlichungsnummer: WO 2000/036357

(56) Entgegenhaltungen:
- EP-A- 0 067 798
- EP-A- 0 750 151
- WO-A-95/01543
- WO-A-97/18429
- DE-A- 4 108 763

## Beschreibung

Die vorliegende Erfindung betrifft Verfahren zum Längspreßverbinden eines Wasserführungsrohres mit einem Strangpreßprofilrohr eines Aluminiumheizkörpers über einen Anschlußstutzen.

Die vorliegende Erfindung betrifft weiterhin ein Strangpreßprofilrohr mit einem Anschlußstutzen zur Verwendung bei diesem Verfahren.

Es sind bereits viele Systeme zum Verbinden von Aluminiumteilen, wie auch von Bestandteilen eines Aluminium-Heizkörper-Systems bekannt.

Bei einem bekannten Verfahren zum Längsverbinden von Alumihium-Rohrteilen werden die beiden Rohrteile indirekt über einen Stahl-Fitting miteinander verbunden. Dieses an sich recht einfache Verfahren weist unter anderem den Nachteil auf, daß die dadurch entstandenen Längspreßverbindungen eine Dichtheit nur bis zu einem Leitungsdruck bis zu 6 bar (ca. 0,6 MPa) gewährleisten. Somit kann die gegenwärtig beispielsweise auf dem deutschen Markt geforderte Dichtheit bei einem Leistungsdruck von 10 bar (ca. 1,0 MPa) nicht erreicht werden. Zusätzlich entsteht bei dieser Fügungsart die Gefahr einer Korrosion.

Um das Problem der mangelhaften Druckbeständigkeit zu überwinden, hat es verschiedene Weiterentwicklungen des vorstehend genannten Grundgedankens gegeben, auf die im folgenden kurz eingegangen wird:

Bei einem dieser Verfahren werden Aluminium-Fittinge in die zu verbindenden Aluminium-Teile eingepreßt und anschließend verklebt. Dieses Verfahren ergab eine höhere Dichtheit, jedoch erwiesen sich die eingesetzten Klebstoffe bei den hohen, beim Heizbetrieb auftretenden Temperaturen, auf Dauer als unstabil.

Die US-Patentschrift 4 341 346 offenbart einen Heizkörper zur Verwendung in Zentralheizungssystemen, bei dem die zu verbindenden Aluminium-Teile über einen an seiner Außenoberfläche abgeschrägten Fitting zusammengefügt werden. Da die Verbindung über den Fitting alleine, wie vorstehend ausgeführt, nur gegen Drücke bis zu maximal 6 bar beständig ist, muß das Wasserführungsrohr und das Strangpreßprofilrohr des Aluminiumheizkörpers über zwei zusätzliche Einrastverbindungen zusammengehalten werden

Weiterhin muß bei diesem Verfahren ein Stahl-Fitting eingesetzt werden, da der Einsatz eines Aluminium-Fittings in diesem Fall zu einer starken plastischen Verformung und einer somit nicht ausreichenden Stabilität führen würde. Dadurch entsteht, wie auch vorstehend angesprochen, die Gefahr einer Korrosion.

Es ist weiterhin eine Vorgehensweise bekannt, bei der an den Verbindungsstellen der Rohre Dichtungen angebracht werden, und die beiden Rohrteile daraufhin verschweißt werden. Dieses System bringt jedoch einen hohen Material- und Zeitaufwand mit sich.

Die US-Patentschrift 4 046 305 offenbart ein System zum Verbinden zweier Metallteile aus Aluminium oder Aluminium-Legierungen. Die Aluminiumteile werden durch eine Zwischenschicht aus einer kupferreichen Legierung, die ungefähr 95 % Kupfer einschließt, durch Erhitzen auf 515 bis ungefähr 530 °C durch metallurgische Bindung miteinander verbunden.

Die US-Patentschrift 5 316 206 offenbart ein ähnliches Verfahren zur Verbindung von Aluminium-Teilen, bei dem es sich um ein Lötverfahren handelt, durch das zwei Aluminiumteile über eine Zink- oder Zinklegierungs-Schicht durch Erhitzen auf 450 bis 630°C verbunden werden.

Aus der DE 31 45 914 A1 ist eine Rohrverbindung zwischen zwei Rohrteilen bekanntgeworden, bei denen das eine Rohrteil in das andere Rohrteil eingepreßt wird, wobei das eine Teil um einen bestimmten Betrag gedreht wird. Durch das Verbinden der beiden Rohrteile unter diesen Bedingungen findet eine Riefenbildung an beiden Teilen statt, und die Riefenlinien greifen in ähnlicher Weise ineinander wie flache Schraubgewindegänge und bewirken, daß sich die Teile so verhalten, als ob sie durch eine Schraubverbindung miteinander verbunden wären. Diese Rohrverbindung ist für Ölfeld-Rohrleitungen bestimmt und für die Herstellung von Aluminium-Heizkörpern ungeeignet.

Die US-Patentschrift 4 856 581 offenbart ein System zum Zusammenbau von Heizkörperelementen, bei dem T-förmige Verteilerrohre in das konisch zulaufende Strangpreßprofilrohr eines Aluminium-Heizkörpers eingepreßt werden. Die Abdichtung der Verbindung der Aluminium-Teile erfolgt durch einen, in eine ringförmige Rille eingebetteten Dichtring.

Die vorgenannten Fügesysteme können zwar teilweise die an sie gestellten Anforderungen im Hinblick auf die Druckverhältnisse in einem Wärmeaustauscher erfüllen, jedoch ist ihre Zusammensetzung in den meisten Fällen apparativ aufwendig und gerade bezüglich ihrer Langzeitanwendung durch vielfache Schwachstellen (Korrosion etc.) gekennzeichnet.

Die W0 95 01543 A beschreibt einen Heizungskörper aus Aluminium, bei dem ein horizontales Wasserführungsrohr mit dem vertikalen Strangpreßprofilrohr über einen mit dem Wasserführungsrohr verbundenen, einen konischen Bereich aufweisenden Anschlußstutzen verbunden ist. Die bei der Preßverbindung aufeinander gleitenden Oberflächen von Anschlußstutzen und Strangpreßprofilrohr sind dabei glatt ausgebildet. Es hat sich gezeigt, daß eine druckdichte Verbindung durch die hier angewandte Methode nicht gewährleistet werden kann.

Die EP-A-0 750 151 offenbart eine Rohr-in-Rohr-Verbindung, bei der der eine Endabschnitt eines Rohres einen Steckerteil aufweist, der von einem Hülsenteil des weiterführenden Rohres aufgenommen wird. Dieser Steckerteil ist außenseitig mit scharfkantigen Rippen versehen, die widerhakenartig ausgebildet sind und die Verbindung gegen ein Lösen sichern sollen.

Die DE 41 08 763 A1 beschreibt einen Radiator für Raumtemperierung sowie ein Verfahren zur Herstellung von Sektionen des Radiators. Dabei wird die Innenwand der jeweiligen Radiatorsektion derart an die mitformende Außenwand derselben Radiatorsektion reibungsschlüssig angepreßt, daß dabei die Innenwand beim axialen Einschieben eine radiale Aufweitung bewirkt und beim axialen Einschieben fortschreitend eine Aufweitung stattfindet. Die dabei in Reibberührung miteinander kommenden Teile sind zylindrisch und glatt ausgebildet.

Die DE 31 45 914 A1 beschreibt eine Rohrverbindung für Ölfeld-Rohrleitungen, die in Form einer Steckverbindung ausgebildet ist und der innere Steckerteil (Vaterteil) in den anderen Steckerteil (Mutterteil) eingeschoben und gedreht wird, wobei eine radiale Aufweitung des Mutterteils erfolgt. An der Berührungsfläche werden die Steckerteile mit einem Schmierund Dichtungsmaterial überzogen, um nach erfolgter Aufweitung eine Dichtung zwischen den Rohrabschnitten zu gewährleisten.

Der Erfindung liegt die Aufgabe zugrunde, ein Fügeverfahren für Aluminium-Heizkörper zu schaffen, durch das die zu verbindenden Teile ohne Einsatz von Hitze, Klebstoffen und Dichtringen lötfrei und ohne Schweißen zusammengefügt werden können, wobei die Heizkörper gegenüber Korrosion nicht anfällig sind und die mechanische druckdichte Verbindung zwischen dem Anschlußstopfen und dem Rohr verbessert ist.

Gelöst wird die gestellte Aufgabe durch die im Patentanspruch 1 angegebenen Merkmale. Vorteilhafte Ausgestaltungen und Weiterbildungen ergeben sich aus den Unteransprüchen.

Die realen Anforderungen an Wärmeaustauscher hinsichtlich ihrer Materialbeschaffenheit und Fertigung sind umfassend. Die Einsatzzeiten von Wärmeaustauschern, insbesondere von Heizkörpern, betragen viele Jahre, wobei das Material starken Temperaturschwankungen und hohen Drücken ausgesetzt ist. So kann der bei einem Einsatz der Wärmeaustauscher in Fernwärmenetzen auftretende Maximaldruck ca. 2,5 MPa und der Temperaturbereich von Innenraumtemperatur bis ca. 130 °C betragen.

Bei der vorliegenden Erfindung ist durch die Ausgestaltung des Anschlußstutzens und die beim Fügeverfahren verwendeten Parameter ein System geschaffen worden, das bei einfacher Handhabung und geringem Materialaufwand hervorragende Ergebnisse hinsichtlich der Druckbeständigkeit der geschaffenen Verbindung ergibt. Das vorliegende System kommt ohne zusätzliche Bestandteile wie Dichtringe, Verklebungen und Verbindungsteile aus anderen Materialien aus, wodurch diese hinsichtlich ihrer teilweise mangelhaften Stabilität und Korrosionsgefahr bedenklichen Hilfsmittel vermieden werden. Es handelt sich bei der Verbindung der Aluminiumteile gemäß der vorliegenden Erfindung um eine rein mechanische Verbindung zwischen den Metallteilen ohne Schweißen, Löten, Kleben etc.

Das Fügen von Aluminium-Teilen im Heizungsbau gestaltet sich aus dem Grund schwierig, daß ein Einquetschen eines Teiles in das andere mit Gegenhalten nicht möglich ist. Bedingt durch die Form der Wärmeaustauscher mit zwei Anschlüssen an Heizmittelführungsrohre kann ein Verbinden auf dem Weg des Pressens nur durch Einspannen des Aluminium-Heizkörpers in einen Spannblock ohne Gegenhalten erfolgen.

Die vorliegende Erfindung bezieht sich auf ein Strangpreßprofilrohr mit einem speziell ausgebildeten Anschlußstutzen. Die gestellte Aufgabe wird hierbei gelöst durch die in den Ansprüchen 7 bzw. 8 angegebenen Merkmale.

Bei den vorliegenden Verfahren werden Aluminiumteile durch Längspreßverbinden dadurch zusammengefügt, daß ein horizontales Wasserführungsrohr mit einem vertikalen Strangpreßprofilrohr eines Aluminium-Heizkörpers über den mit dem Wasserführungsrohr verbundenen bzw. einstückig ausgebildeten Anschlußstutzen verbunden wird.

Der Anschlußstutzen weist einen konischen Bereich auf, der sich zum Anschlußstutzenende hin verjüngt. Der Anschlußstutzen kann mit dem Wasserführungsrohr einstückig ausgebildet sein, wobei ein mit Rippen versehener Bereich aus einem Strangpreßprofil am Wasserführungsrohr herausgefräst wird.

Bei einem weiteren Verfahren liegt der Anschlußstutzen zunächst vom horizontalen Wasserführungsrohr getrennt vor, und ist gemäß der vorliegenden Erfindung in seinem konischen Bereich mit nach außen stehenden, scharfkantigen Rippen versehen. Der Anschlußstutzen wird nunmehr durch ein geeignetes Verfahren mit dem Wasserführungsrohr verbunden, was gemäß einer Ausführungsform durch eine Reibschweißverbindung erfolgen kann.

Eine weitere Möglichkeit besteht darin, den Anschlußstutzen mit dem Wasserführungsrohr über ein Gewinde zu verbinden. Diese Gewindeverbindung erfolgt durch ein Außengewinde 12, das an der Seite des konischen Anschlußstutzenbereichs, die dem Anschlußstutzenende 6 gegenüberliegt, angebracht ist, und durch ein am Wasserführungsrohr 1 vorgesehenes dazu passendes Innengewinde. Im Gegensatz zu Anschlußstutzen, die aus einem Vollmaterialbereich am Wasserführungsrohr herausgefräst wurden, ist hier zwischen dem konischen Bereich 9 des Anschlußstutzens und dem Außengewinde 12 ein Absatz 10 notwendig, um die Auflagefläche am Stutzen zu vergrößern, was zur Vermeidung einer plastischen Deformation und einem Lösen der Verschraubung dient.

Gemäß einer bevorzugten Ausführungsform weist der Absatz 10 eine Länge von 6 mm und einen Außendurchmesser von 26 mm auf.

Der nunmehr mit dem Wasserführungsrohr verbundene, oder von vorneherein mit diesem einstückig ausgebildete Anschlußstutzen wird unter elastischer und wenigstens teilweiser plastischer Verformung in das Strangpreßprofilrohr ohne Zwischenfügen eines Dichtungsringes eingepreßt.

Der konische Bereich des Anschlußstutzens kann vor diesem Vorgang fakultativ mit einem Dichtmittel beschichtet werden.

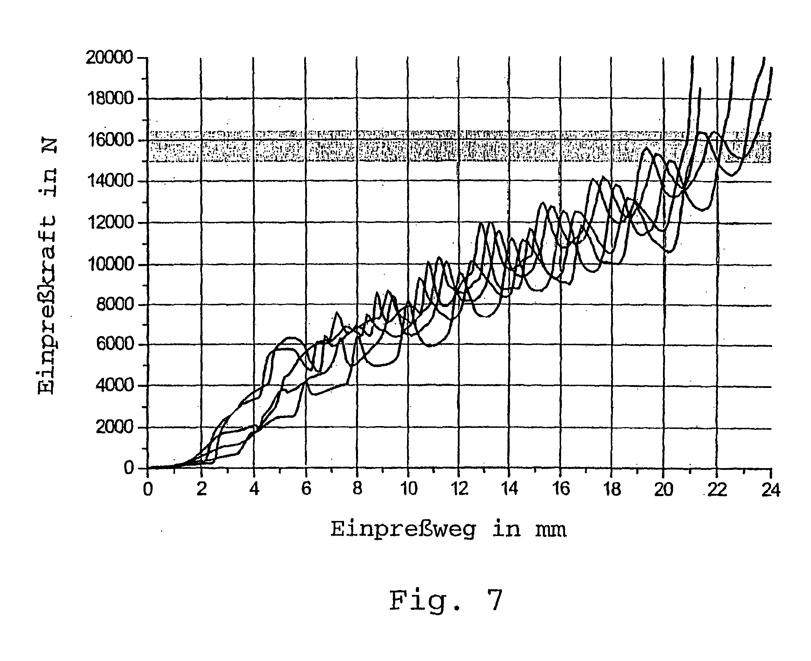

Der maximale Einpreßdruck des Anschlußstutzens in das Strangpreßprofilrohr beträgt 25 kN, vorzugsweise 12 bis 15,5 kN. Ein Kraft-Weg-Diagramm, das den Einpreßverlauf beispielhaft darstellt, ist nachstehend in Fig. 7 dargestellt.

Die Verbindung wird zuletzt durch einen Druckversuch auf Dichtheit überprüft.

Entscheidend für die Durchführung des Verfahrens ist die spezielle Ausgestaltung des Anschlußstutzens 4, der, wie vorher dargestellt, einen sich zum Anschlußstutzenende 6 hin verjüngenden, konischen Bereich 9 aufweist.

Anschlußstutzen, die zur Verbindung mit den Wasserführungsrohren vorgesehen sind, weisen weiterhin einen Absatz 10 auf, dem eine wie vorstehend beschriebene Funktion zufällt.

Der konische Bereich 9 weist an seiner Außenoberfläche glatte Abschnitte 7, 8 auf, die sich an seinen jeweiligen Enden befinden. Zwischen diesen glatten Abschnitten 7, 8 befindet sich ein Abschnitt 11, der aus scharfkantigen Rippen gebildet ist. Der konische Bereich des Anschlußstutzens 4 weist einen Neigungswinkel von ungefähr 1,5°, vorzugsweise 1,43°, auf. Der Wahl des Neigungswinkels kommt insbesondere deswegen große Bedeutung zu, da einerseits eine feste Fügung des Wasserführungsrohres mit dem Strangpreßprofilrohr erreicht werden soll, andererseits die Rippen selbst keiner zu starken Verformung unterworfen werden sollen.

Gemäß einer bevorzugten Ausführungsform weist der Anschlußstutzen 4 im Abschnitt 11 seines konischen Bereichs 9 neun scharfkantige Rippen bzw. zehn Kerben auf.

Gemäß weiteren bevorzugten Ausführungsformen erstreckt sich der konische Bereich 9 über eine Gesamtlänge von 25 mm, und der am Anschlußstutzen 6 gelegene Abschnitt 7 weist eine Länge von 4 mm und der auf der entgegengesetzten Seite des Anschlußstutzens 4 gelegene Abschnitt 8 eine Länge von 1 mm auf. Gemäß weiterer Ausführungsformen weist der Anschlußstutzen 4 im konischen Bereich 9 am Anschlußstutzenende 6 einen Außendurchmesser von 15 mm und am gegenüberliegenden Ende einen Außendurchmesser von 16 mm auf. Der Innendurchmesser des Anschlußstutzens beträgt vorzugsweise 11,5 mm.

Die Aluminium-Legierung kann durch verschiedene Metalle gebildet sein, jedoch wird AlMgSi0,5 bevorzugt.

Nachstehend werden Ausführungsbeispiele der Erfindung anhand der Zeichnungen beschrieben. In den Zeichnungen zeigt:
Fig.1 eine teilweise geschnittene Vorderansicht eines einstückig mit dem Wasserführungsrohr ausgebildeten Anschlußstutzens;
Fig.2 eine Draufsicht zu Fig.1;
Fig.3 eine Vorderansicht eines Anschlußstutzens mit Absatz und Schraubgewinde;
Fig.4 eine teilweise geschnittene Vorderansicht des in das Wasserführungsrohr eingeschraubten Anschlußstutzens;
Fig.5 Draufsicht zu Fig.4;
Fig.6 eine teilweise geschnitten dargestellte Anordnung zur Durchführung eines erfindungsgemäßen Verfahrens;
Fig.7 ein Kraft-Weg-Diagramm.

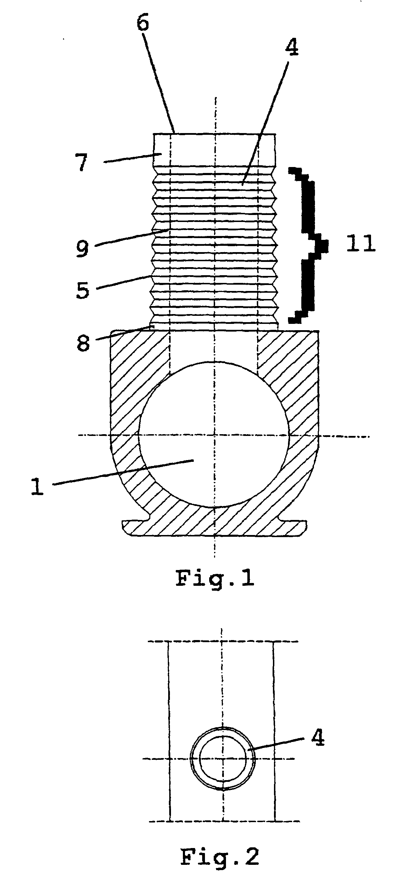

Gemäß einer in Fig. 1 dargestellten Ausführungsform ist ein Anschlußstutzen mit dem Wasserführungsrohr einstückig ausgebildet. Das Wasserführungsrohr 1 ist zur Versorgung des Strangpreßprofilrohres 2 im Aluminiumheizkörper 3 mit Heizflüssigkeit vorgesehen. Die Außenoberfläche des konischen Anschlußstutzens weist neun aus einem Strangpreßprofil herausgefräste Rippen auf, wodurch insgesamt zehn Kerben entstehen. Am Anschlußstutzenende 6 befindet sich ein glatter Abschnitt 7, der das Einfügen des Anschlußstutzens in das Strangpreßprofilrohr erleichtern soll.

Am gegenüberliegenden Ende des Anschlußstutzens 4 ist ein weiterer glatter Abschnitt 8 ausgebildet. In Fig. 2 ist eine Draufsicht des vorstehend geschilderten Wasserführungsrohrs mit Anschlußstutzen dargestellt.

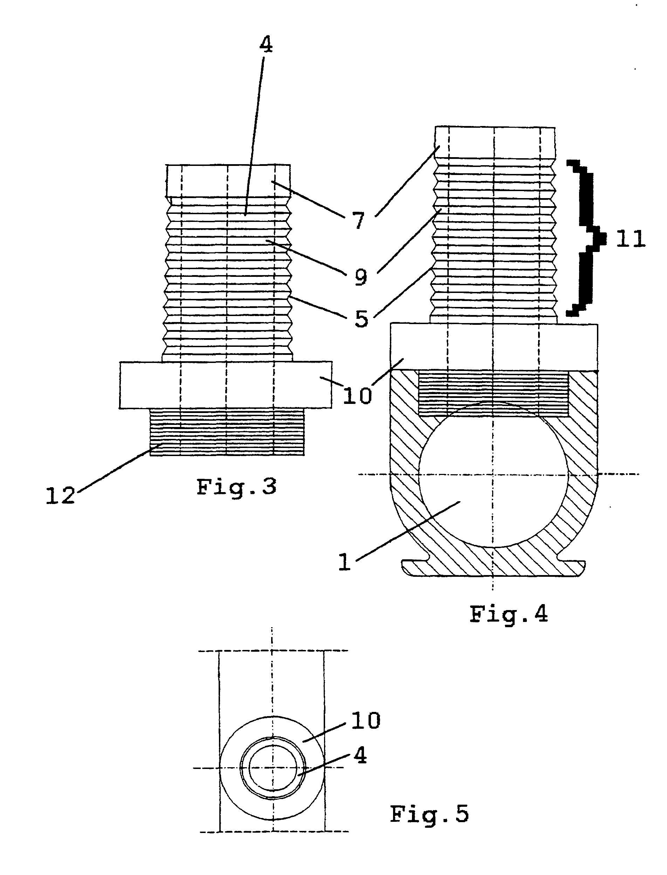

Gemäß Fig. 3 ist der Anschlußstutzen ebenfalls mit neun Rippen bzw. zehn Kerben ausgebildet, wobei der konische Abschnitt 9 nur einen Teilbereich der Anschlußstutzens darstellt. An dem, dem glatten Abschnitt 7 gegenüberliegenden, Ende des konischen Bereichs schließt sich ein Absatz 10 mit größerem Außendurchmesser an, der mit einem Außengewinde verbunden ist. Das dargestellte Außengewinde 12 ist zum Einschrauben in das Innengewinde des Wasserführungsrohrs 1 vorgesehen.

In diesem Sinne zeigt Fig. 4 den mit dem Wasserführungsrohr verbundenen Anschlußstutzen 4, wobei das Außengewinde des Anschlußstutzens in das Innengewinde des Wasserführungsrohrs eingeschraubt ist. Eine Draufsicht auf den in das Wasserführungsrohr eingeschraubten Anschlußstutzen von Fig. 4 ist in Fig. 5 veranschaulicht, wobei der Absatz 10 des Anschlußstutzens als breiter Rand erkennbar ist.

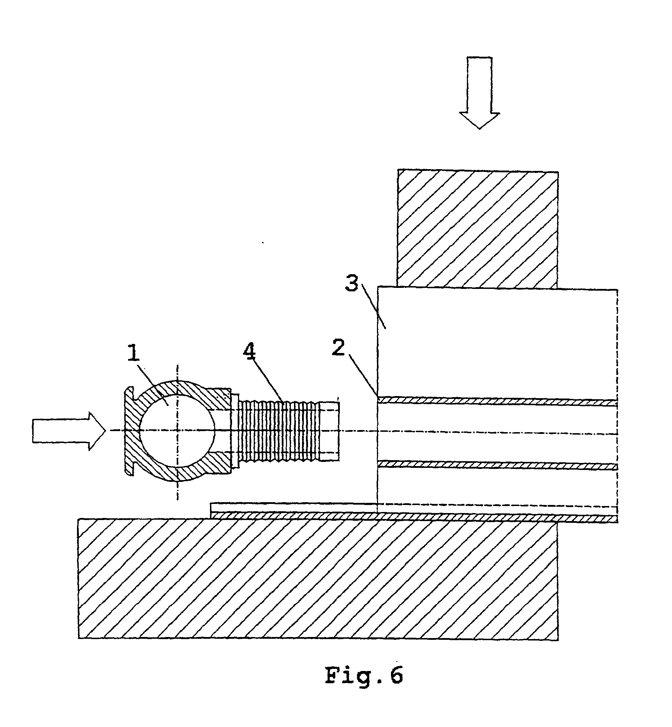

Eine Ausführungsform eines erfindungsgemäßen Verfahrens ist in Fig. 6 dargestellt. Ein mit dem Wasserführungsrohr einstückig ausgebildeter Anschlußstutzen, dessen Rippen aus einem Strangpreßprofil herausgefräst wurden, wird in ein Strangpreßprofilrohr eines Aluminium-Wärmeaustauschers eingepreßt. Das Strangpreßprofilrohr 2 ist über den Wärmeaustauscher 3 durch einen Spannblock fixiert. Die Einpreßrichtung des Anschlußstutzens ist durch einen horizontalen Pfeil angezeigt.

Ein Diagramm, das die Kraft-Weg-Verläufe beim Einpressen mehrerer Anschlußstutzen gemäß der vorliegenden Erfindung in ein Strangpreßprofilrohr darstellt, ist in Fig. 7 gezeigt. Auf der X-Achse ist der Einpreßweg in mm, auf der Y-Achse die Einpreßkraft in N angegeben.

Nachfolgend ist ein Beispiel zur Durchführung des erfindungsgemäßen Verfahrens angegeben.

Zunächst wurde ein mit scharfkantigen Rippen versehener Anschlußstutzen aus einem Vollmaterialbereich am Rohrprofil herausgefräst. Dabei entstanden 9 Rippen bzw. 10 Kerben. Der mit dem Wasserführungsrohr (1) einstückig ausgebildete Anschlußstutzen wies die folgenden Abmessungen auf:
- Neigungswinkel des konischen Bereichs: 1,43°
- Gesamtlänge des konischen Bereichs: 25 mm
- Innendurchmesser: 11,5 mm
- Außendurchmesser am Anschlußstutzenende: 15 mm
- Außendurchmesser am gegenüberliegenden Ende: 16 mm
- Länge des glatten Abschnitts am Anschlußstutzenende: 4 mm
- Länge des glatten Abschnitts am gegenüberliegenden Ende: 1 mm

Die verwendete Aluminium-Legierung war AlMgSi0,5.

In einem nächsten Schritt wurde der Anschlußstutzen mit einem geeigneten thermostabilen Dichtmittel beschichtet. Der beschichtete Anschlußstutzen wurde darauf in das Strangpreßprofilrohr eingepreßt, das (über den Aluminiumheizkörper) durch eine Spannvorrichtung fixiert war.

Die benötigte Einpreßkraft betrug maximal 15,5 kN. Es wurden im folgenden Versuche hinsichtlich des Dichtheitsdruckes bzw. des Berstdruckes der Längspreßverbindung zwischen dem Anschlußstutzen und dem Strangpreßprofilrohr durchgeführt:

Um die Bedingungen beim Betrieb einer Heizanlage realistisch nachzuahmen, wurde der Versuch in einem Ofen bei 130°C durchgeführt. Der Dichtheitsdruck gibt in diesem Zusammenhang an, wann sich an der Verbindung erste Tröpfchen zeigten, wohingegen der Berstdruck als derjenige festgelegt wurde, bei dem sich der Stutzen schlagartig aus dem Strangpreßprofilrohr löste. Es zeigte sich ein Dichtheitsdruck von 7,5 MPa, was weit oberhalb des bei einem Einsatz der erfindungsgemäßen Verbindung in Fernwärmenetzen zu erwartenden Maximaldrucks liegt. Der Berstdruck der Verbindung lag bei 17,5 MPa.

### Bezugszeichenliste

- 1: Wasserführungsrohr
- 2: Strangpreßprofilrohr
- 3: Aluminiumheizkörper
- 4: Anschlußstutzen
- 5: Rippen
- 6: Anschlußstutzenende
- 7: erster glatter Abschnitt am Anschlußstutzenende
- 8: zweiter glatter Abschnitt
- 9: konischer Bereich des Anschlußstutzens
- 10: Absatz
- 11: Abschnitt des konischen Bereichs mit Rippen
- 12: Schraubgewinde

## Patentansprüche

1. Verfahren zum Längspreßverbinden eines horizontalen Wasserführungsrohres (1) mit dem vertikalen Strangpreßprofilrohr (2) eines Aluminiumheizkörpers (3) über einen mit dem Wasserführungsrohr (1) verbundenen, einen konischen Bereich aufweisenden Anschlußstutzen (4), bei dem
- der Anschlußstutzen (4) in seinem konischen Bereich mit nach außen stehenden, scharfkantigen Rippen (5) versehen wird,
- der Anschlußstutzen (4) mit dem Wasserführungsrohr (1) verbunden wird, und
- der mit dem Wasserführungsrohr (1) verbundene Anschlußstutzen (4) unter elastischer und wenigstens teilweiser plastischer Verformung in das Strangpreßprofilrohr (2) ohne Zwischenfügung eines Dichtungsringes einpreßt wird.

2. Verfahren nach Anspruch 1,
**dadurch gekennzeichnet, daß** der Anschlußstutzen (4) aus einem Strangpreßprofil am Wasserführungsrohr (1) unter Bildung der scharfkantigen Rippen herausgefräst und dadurch einstückig mit diesem hergestellt wird.

3. Verfahren nach Anspruch 1, bei dem der mit Rippen versehene Anschlußstutzen (4) durch eine Reibschweißverbindung mit dem Wasserführungsrohr (1) verbunden wird.

4. Verfahren nach Anspruch 1, bei dem der mit Rippen versehene Anschlußstutzen (4) durch eine Gewindeverbindung mit dem Wasserführungsrohr (1) verbunden wird.

5. Verfahren nach Anspruch 1 - 4, bei dem der konische Bereich des Anschlußstutzens vor dem Längspreßverbinden mit einem Dichtmittel beschichtet wird.

6. Verfahren nach Anspruch 1 - 5, bei dem der max. Einpreßdruck des mit dem Wasserführungsrohr (1) verbundenen Anschlußstutzens in das Strangpreßprofilrohr (2) 25 kN, vorzugsweise 12 bis 15,5 kN beträgt.

7. Strangpreßprofilrohr (2) eines Aluminiumheizkörpers mit einem Anschlußstutzen (4), der Anschlußstutzen (4) besteht aus einem konischen Bereich (9), einem Absatz (10) und aus einem Bereich zum Verbinden des Anschlußstutzens mit einem Wasserführungsrohr (1), wobei der konische Bereich (9) an seiner Außenoberfläche an seinen Enden glatte Abschnitte (7, 8) und einen dazwischenliegenden Abschnitt (11) aufweist und sich der konische Bereich zum Anschlußstutzenende (6) hin verjüngt, wobei der Anschlußstutzen (4) mit dem Wasserführungsrohr (1) verbunden ist,
**dadurch gekennzeichnet, daß** der dazwischenliegende Abschnitt (11) aus scharfkantigen Rippen gebildet ist und der Anschlußstutzen (4) unter elastischer und wenigstens teilweise plastischer Verformung in das Strangpreßprofil (2) ohne Zwischenfügung eines Dichtrings eingepreßt ist.

8. Strangpreßprofilrohr (2) eines Aluminiumheizkörpers mit einem Anschlußstutzen (4), der Anschlußstutzen (4) besteht aus einem konischen Bereich (9) und ist mit einem Wasserführungsrohr (1) einstückig verbunden, wobei der konische Bereich (9) an seiner Außenoberfläche an seinen Enden glatte Abschnitte (7, 8) und einen dazwischenliegenden Abschnitt (11) aufweist und sich der konische Bereich zum Anschlußstutzenende (6) hin verjüngt,
**dadurch gekennzeichnet, daß** der dazwischenliegende Abschnitt (11) aus scharfkantigen Rippen gebildet ist und der Anschlußstutzen (4) unter elastischer und wenigstens teilweise plastischer Verformung in das Strangpreßprofil (2) ohne Zwischenfügung eines Dichtrings eingepreßt ist.

9. Strangpreßprofilrohr (2) eines Aluminiumheizkörpers mit einem Anschlußstutzen (4) nach Anspruch 7, bei dem der Absatz (10) eine Länge von 6 mm und einen Außendurchmesser von 26 mm aufweist.

10. Strangpreßprofilrohr (2) eines Aluminiumheizkörpers mit einem Anschlußstutzen (4) nach Anspruch 9, bei dem der Bereich zum Verbinden des Anschlußstutzens (4) mit dem Wasserführungsrohr (1) aus einem 1,27 cm (1/2-Zoll)-Schraubgewinde (12) besteht, das 6 mm lang ist und einen Innendurchmesser von 11,5 mm aufweist.

## Claims

1. Method for the longitudinal compression joining of a horizontal water conduit pipe (1) with the vertical extruded section pipe (2) of an aluminium radiator (3) via a connecting sleeve (4) that is connected to the water conduit pipe (1) and has a conical area, in which
- in its conical area, the connecting sleeve (4) is equipped with sharp-edged ribs (5) that project outwards,
- the connecting sleeve (4) is connected to the water conduit pipe (1), and
- the connecting sleeve (4) that is connected to the water conduit pipe (1) is pressed into the extruded section pipe (2), with elastic and at least partial plastic deformation, and without the intercalation of a sealing washer.

2. Method in accordance with claim 1, **characterised in that** the connecting sleeve (4) is milled out of an extruded section on the water conduit pipe (1), forming the sharp-edged ribs, and thus is produced in one piece with it

3. Method in accordance with claim 1, in which the connecting sleeve (4) that is equipped with ribs is connected to the water conduit pipe (1) through a friction weld connection.

4. Method in accordance with claim 1, in which the connecting sleeve (4) that is equipped with ribs is connected to the water conduit pipe (1) through a threaded connection.

5. Method in accordance with claim 1 to 4, in which the conical area of the connecting sleeve is coated with a sealant prior to longitudinal compression joining.

6. Method in accordance with claim 1 to 5, in which the max. press-fitting pressure of the connecting sleeve that is connected to the water conduit pipe (1) is 25 kN into the extruded section pipe (2), preferably 12 to 15.5 kN.

7. Extruded section pipe (2) of an aluminium radiator with a connecting sleeve (4), the connecting sleeve (4) comprises a conical area (9), a shoulder (10), and an area for joining the connecting sleeve to a water conduit pipe (1), wherein the conical area (9) has on its outer surface on its ends smooth sections (7, 8) and a section (11) located in between them, and the conical area tapers towards the end (6) of the connecting sleeve, wherein the connecting sleeve (4) is connected to the water conduit pipe (1),
**characterised in that**
the intermediate section (11) is formed of sharp-edged ribs and the connecting sleeve (4) is pressed into the extruded section pipe (2), with elastic and at least partial plastic deformation, and without the intercalation of a sealing washer.

8. Extruded section pipe (2) of an aluminium radiator with a connecting sleeve (4), the connecting sleeve (4) comprises a conical area (9), and is connected as one piece to a water conduit pipe (1), wherein the conical area (9) has on its outer surface on its ends smooth sections (7, 8) and a section (11) located in between them, and the conical area tapers towards the end (6) of the connecting sleeve,
**characterised in that**
the intermediate section (11) is formed of sharp-edged ribs and the connecting sleeve (4) is pressed into the extruded section pipe (2), with elastic and at least partial plastic deformation, and without the intercalation of a washer.

9. Extruded section pipe (2) of an aluminium radiator with a connecting sleeve (4) in accordance with claim 7, in which the shoulder (10) has a length of 6 mm and an external diameter of 26 mm.

10. Extruded section pipe (2) of an aluminium radiator with a connecting sleeve (4) in accordance with claim 9, in which the area for joining the connecting sleeve (4) to the water conduit pipe (1) comprises a screw thread (12) of 1.27 cm (1/2") that is 6 mm long and has an internal diameter of 11.5 mm.

## Revendications

1. Procédé de connexion par serrage longitudinal d'un tube de guidage d'eau (1) horizontal au tube profilé extrudé ou tube profilé filé (2) vertical d'un corps de chauffage (3) en aluminium, par l'intermédiaire d'un raccord (4), présentant une zone conique, reliée au tube de guidage d'eau ou tube conducteur d'eau (1), dans lequel
- le raccord (4), dans sa zone conique, est muni de nervures (5) à arête vive, placées extérieurement,
- le raccord (4) est relié au tube de guidage d'eau (1),
- le raccord (4) relié au tube de guidage d'eau (1), est enfoncé dans le tube profilé extrudé (2), sans interposer de bague d'étanchéité, ceci s'accompagnant d'une déformation élastique et au moins partiellement plastique.

2. Procédé selon la revendication 1,
**caractérisé en ce que** le raccord (4) est fabriqué par usinage de fraisage, à partir d'un profilé extrudé ou filé, sur le tube de guidage d'eau (1), en formant les nervures à arête vive, et est, de ce fait, fabriqué d'une seule pièce avec celui-ci.

3. Procédé selon la revendication 1, dans lequel le raccord (4), muni de nervures, est relié au tube de guidage d'eau (1) par une liaison par soudage par friction.

4. Procédé selon la revendication 1, dans lequel le raccord (4), muni de nervures, est relié au tube de guidage d'eau (1) par une liaison filetée.

5. Procédé selon les revendications 1 à 4, dans lequel la zone conique du raccord est revêtue d'un produit d'étanchéité, avant de procéder à la liaison par serrage longitudinal.

6. Procédé selon les revendications 1 à 5 dans lequel la pression d'enfoncement maximale du raccord relié au tube de guidage d'eau (1) dans le tube profilé extrudé (2), est de 25 kN, de préférence de 12 à 15,5 kN.

7. Tube profilé extrudé (2) d'un corps chauffant en aluminium, comprenant un raccord (4), le raccord (4) étant formé d'une zone conique (9), d'un collet (10) et d'une zone pour assurer la liaison du raccord à un tube de guidage d'eau (1), la zone conique (9) présentant, sur sa surface extérieure, à ses extrémités, des tronçons (7, 8) lisses et un tronçon (11) intermédiaire, et la zone conique allant en s'effilant en allant en direction de l'extrémité (6) du raccord, le raccord (4) étant relié au tube de guidage d'eau (1),
**caractérisé en ce que** le tronçon intermédiaire (11) est formé de nervures à arête vive, et le raccord (4) est enfoncé, sans interposition de bague d'étanchéité, dans le profilé extrudé (2), ceci s'accompagnant d'une déformation élastique et au moins partiellement plastique.

8. Tube profilé extrudé (2) d'un corps chauffant en aluminium, avec un raccord (4), le raccord (4) étant formé d'une zone conique (9), et est relié d'une seule pièce à un tube de guidage d'eau (1), la zone conique (9) présentant, sur sa surface extérieure, à ses extrémités, des tronçons (7, 8) lisses et un tronçon (11) intermédiaire, et la zone conique allant en s'effilant en allant en direction de l'extrémité (6) du raccord,
**caractérisé en ce que** le tronçon intermédiaire (11) est formé de nervures à arête vive, et le raccord (4) est enfoncé, sans interposition de bague d'étanchéité, dans le profilé extrudé (2), ceci s'accompagnant d'une déformation élastique et au moins partiellement plastique.

9. Tube profilé extrudé (2) d'un corps chauffant en aluminium, comprenant un raccord (4) selon la revendication 7, dans lequel le collet (10) présente une longueur de 6 mm et un diamètre extérieur de 26 mm.

10. Tube profilé extrudé (2) d'un corps chauffant en aluminium, comprenant un raccord (4), selon la revendication 9, dans lequel la zone servant à la liaison du raccord (4) au tube de guidage d'eau (1) est formée d'un filetage (12) de 1,27 cm (1/2 pouce), ayant une longueur de 6 mm et un diamètre intérieur de 11,5 mm.
